# EUROPEAN PATENT SPECIFICATION

(11) **EP 2 698 264 B1**
(45) Date of publication and mention of the grant of the patent: **03.08.2016**
(21) Application number: 12768106.2
(22) Date of filing: 04.04.2012
(51) Int. Cl.: B60C 11/12, B60C 11/13, B60C 11/11, B60C 11/04

(54) **TIRE**
REIFEN
PNEU

(30) Priority: 08.04.2011 JP 2011086822
(43) Date of publication of application: 19.02.2014
(73) Proprietor: Bridgestone Corporation, Tokyo 104-8340 (JP)
(72) Inventor: OKADA, Junichi, Tokyo, 187-8531 (JP)
(74) Representative: Oxley, Robin John George
(86) International application number: PCT/JP2012/059197
(87) International publication number: WO 2012/137818

(56) References cited:
- EP-A1- 1 580 035
- EP-A1- 1 588 869
- JP-A- 8 244 418
- JP-A- 11 099 810
- JP-A- H07 186 623
- JP-A- 2006 182 304
- JP-A- 2008 012 969
- JP-A- 2009 292 253
- JP-A- 2010 058 569

## Description

### Technical Field

The present invention relates to a tire including blocks partitioned, in a tread surface view, by a plurality of inclined grooves that are inclined relative to a tread width direction and a plurality of circumferential grooves that intersect with the inclined grooves and extend in a tire circumferential direction.

### Background Art

Conventionally, in order to improve snow performance such as snow traction performance or snow handling performance, a tire including a plurality of inclined grooves which are inclined relative to a tread width direction has been widely known (see, for example, Patent Literature 1).

A block adjacent to the inclined groove has edges inclined relative to the tread width direction. Such edges have width-direction edge components which exert force in the tread width direction. For this reason, the edges scratch into a snow surface to rub against the snow surface, so that snow handling performance is improved.

### Citation List

### Patent Literature

Patent Literature 1: Japanese Patent Application Publication No. 2009-292253.
Reference is also made to EP 1588869, which discloses a tire according to the preamble of claim 1.

### Summary of the Invention

However, when the block including the edges inclined relative to the tread width direction is adjacent to the circumferential groove extending in the tire circumferential direction, the inclined groove and the circumferential groove intersect with each other such that the block includes an acute corner. Since the acute corner has weak block stiffness, there is a problem in that the acute corner is more easily worn than other portions.

Therefore, the present invention has been achieved in view of the foregoing situations, and an object thereof is to provide a tire including blocks partitioned by a plurality of inclined grooves that are inclined relative to a tread width direction and a plurality of circumferential grooves that intersect with the inclined grooves and extend in a tire circumferential direction, with which it is possible to improve snow performance while suppressing the blocks from being worn.

In order to solve the aforementioned problem, the present invention has following features. The feature of the present invention is summarized as a tire including blocks (block 100) that, in a tread surface view, are partitioned by a plurality of inclined grooves (inclined groove 130) that extend to be inclined relative to a tread width direction and a plurality of circumferential grooves (circumferential groove 150) that intersect with the inclined grooves and extend in a tire circumferential direction, wherein each block includes a pair of extending portions (extending portion 40) that respectively extend in the tire circumferential direction from a lateral surface (lateral surface 25A) positioned on one side in the tire circumferential direction and a lateral surface (lateral surface 25B) positioned on the other side in the tire circumferential direction, each block includes a pair of protruding portions (protruding portion 60) that respectively protrude from the pair of extending portions in the tire circumferential direction, each extending portion includes, in the tread surface view, an acute corner (corner 45) formed by the inclined groove and the circumferential groove intersecting with each other, one extending portion of the pair of extending portions is positioned at one end side in the tread width direction, and the other extending portion is positioned at the other end side in the tread width direction, and in a cross section taken along the tire circumferential direction and a tire radial direction, an outer surface (surface 60a) of the protruding portion in the tire radial direction is inclined relative to the tire radial direction, wherein each protruding portion includes a portion which is in contact with the lateral surface of a neighboring block in the tire circumferential direction.

According to the features of the present invention, the block includes a pair of extending portions that respectively extend in the tire circumferential direction from a lateral surface positioned on one side in the tire circumferential direction and a lateral surface positioned on the other side in the tire circumferential direction, and a pair of protruding portions that respectively protrude from the pair of extending portions in the tire circumferential direction. Since the pair of extending portions and the pair of protruding portions extend in the tire circumferential direction, the pair of extending portions and the pair of protruding portions include edge portions having width-direction edge components. Thus, since an edge effect can be enhanced, it is possible to improve the snow performance. Further, since the extending portions and the protruding portions extend in the tire circumferential direction, the extending portions and the protruding portions include lateral surfaces, respectively. Accordingly, during traction and cornering, snow columns formed in the inclined grooves are kicked out on the basis of the lateral surfaces of the extending portions and the lateral surfaces of the protruding portions. As a result, in the tire according to the present invention, since a snow-column shearing force effect can be achieved, it is possible to improve the snow performance.

Furthermore, in a cross section taken along the tire circumferential direction and the tire radial direction, the outer surface of the protruding portion in the tire radial direction is inclined relative to the tire radial direction. The corner is an obtuse angle in the cross section taken along the tire circumferential direction and the tire radial direction. Accordingly, since the block stiffness of the corner is improved, it is possible to suppress the corners from being worn.

Moreover, one extending portion of the extending portions is positioned at one end side in the tread width direction, and the other extending portion is positioned at the other end side in the tread width direction. Since the extending portions and the protruding portions are not biased toward one side of the block in the tread width direction, it is possible to maintain a balance of stiffness of the block as a whole. Accordingly, as compared with a case where the extending portions and the protruding portions are biased toward one side of the block in the tread width direction, it is possible to further suppress uneven wear.

The tire may include a plurality of the blocks including one block and another block adjacent to the one block in the tire circumferential direction, and a lateral surface, at the tread width direction side, of the protruding portion of the one block includes a region that is overlapped with a lateral surface, at the tread width direction side, of the protruding portion of the another block in the tire circumferential direction.

In the tread surface view, an inclined angle between the inclined groove and the circumferential groove may be 20 degrees or larger and 70 degrees or smaller.

The tire may include a block array including a plurality of the blocks, and land portions are positioned at both sides of the block array in the tread width direction with the circumferential grooves interposed therebetween.

### Brief Description of the Drawings

[Fig. 1] Fig. 1 is a diagram showing a part of a tread pattern of the tire according to the present embodiment.
[Fig. 2] Fig. 2 is a perspective view of a block 100 according to the present embodiment.
[Fig. 3] Fig. 3 is a transparent perspective view seen through a part of the blocks 100 in Fig. 2.
[Fig. 4] Fig. 4 is a diagram illustrating a part of the tread pattern of the tire according to the present embodiment.
[Fig. 5] Fig. 5(a) is a cross-sectional view taken along A-A of Fig. 4. Fig. 5(b) is a cross-sectional view taken along B-B of Fig. 4.
[Fig. 6] Fig. 6 is a transparent perspective view seen through a part of the blocks 100 in a tire not according to the invention.
[Fig. 7] Fig. 7 is a cross-sectional view of the block 100 shown in Fig. 6 taken along the tire circumferential direction and the tire radial direction.

### Description of the Embodiment

An example of the tire according to the present invention will be described with reference to the drawings. The description will be given in the order of (1) Schematic Configuration of Tread Portion, (2) Block 100, (3) Operation and Effect, (4) Comparative Evaluations and (5) Other Embodiments.

In the following description of the drawings, the same or similar reference numerals are used to designate the same or similar parts. It will be appreciated that the drawings are schematically shown and the ratio and the like of each dimension are different from the real ones. Therefore, a specific dimension should be determined in view of the following description. Moreover, among the drawings, the respective dimensional relations or ratios may differ.

### (1) Schematic Configuration of Tread Portion

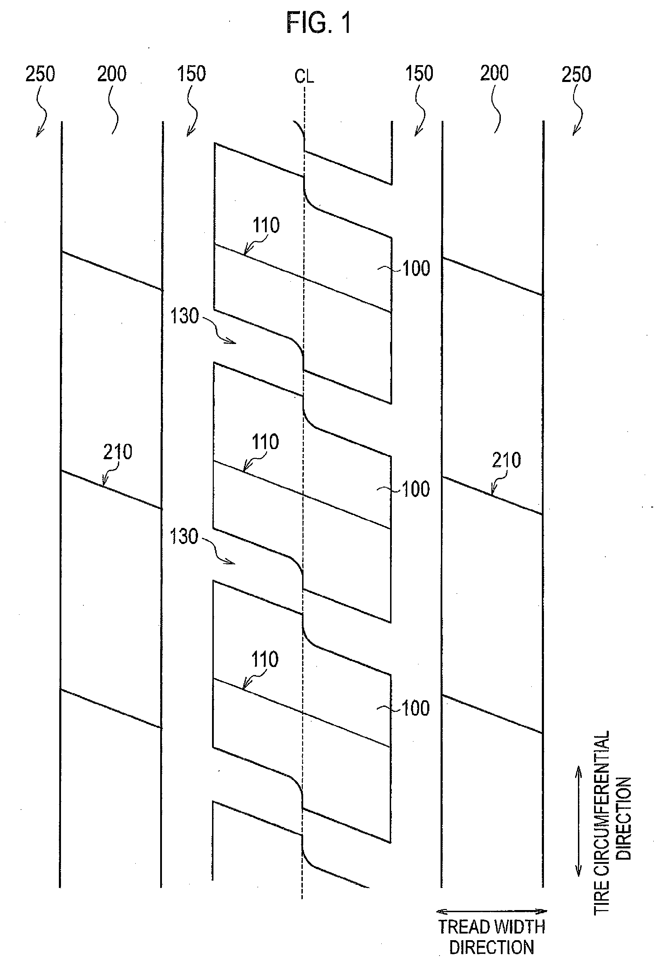

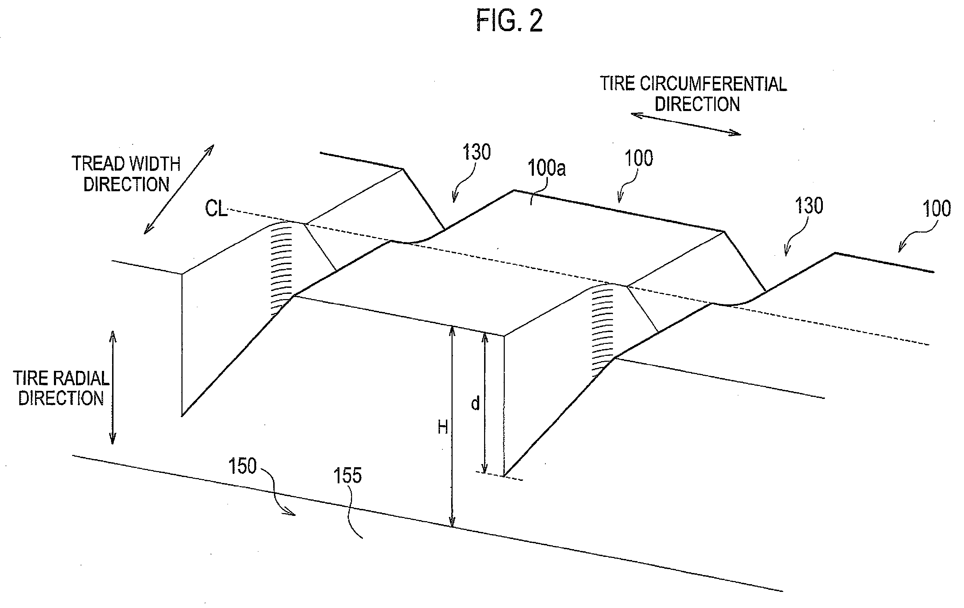

The schematic configuration of a tread portion in a tire according to the present embodiment will be described with reference to Fig. 1. Fig. 1 is a diagram showing a part of a tread pattern of the tire according to the present embodiment. Fig. 2 is a perspective view of a block 100 according to the present embodiment.

As shown in Fig. 1, the tire according to the present embodiment includes a block 100, an inclined groove 130, a circumferential groove 150, a land portion 200, and a circumferential groove 250.

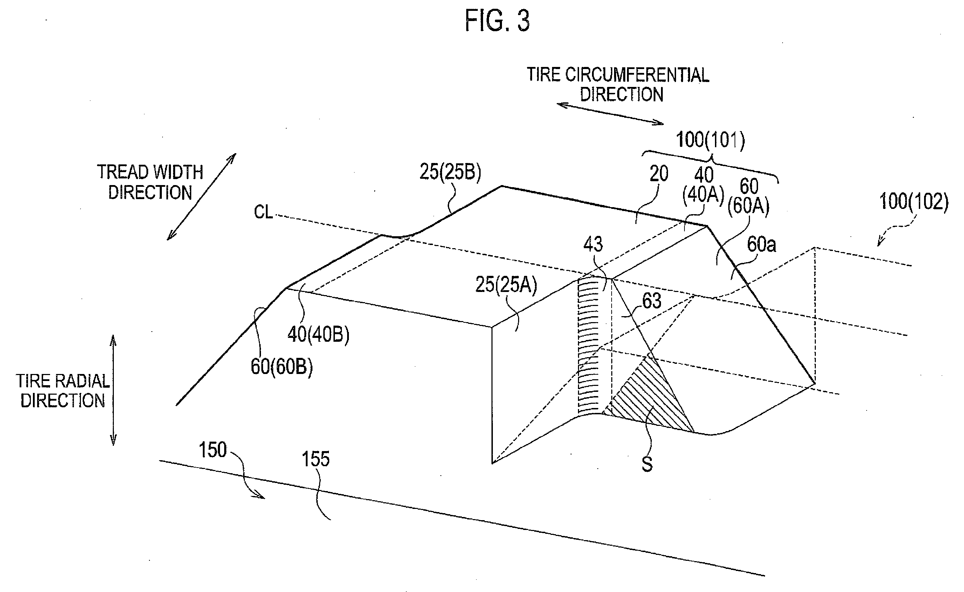

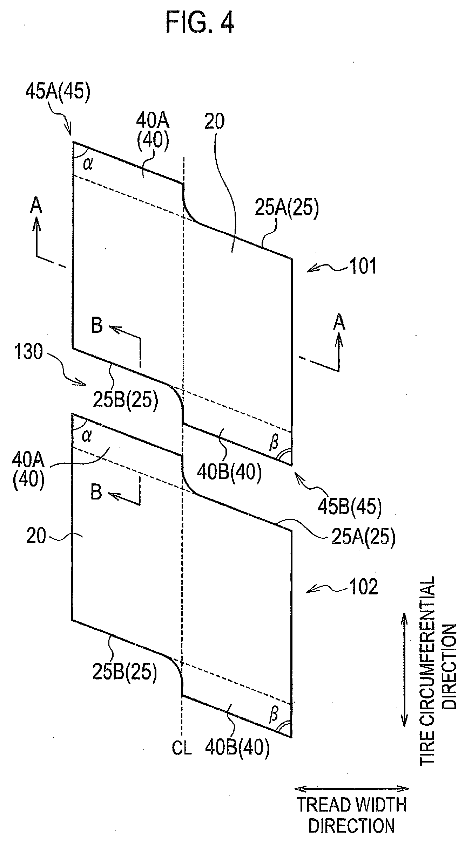

The block 100 is partitioned by the plurality of inclined grooves 130 and the plurality of circumferential grooves 150. The block 100 includes a block main body 20, a pair of extending portions 40, and a pair of protruding portions 60 (see, Fig. 3 and Fig. 4). The configuration of the block 100 will be described below.

The tire according to the present embodiment includes a block array including the plurality of blocks 100. The block array is arranged in a central region. Specifically, the block array is positioned on a tire equator line CL. The land portions 200 are positioned on both sides of the block array in a tread width direction with the circumferential grooves 150 interposed therebetween.

The block 100 includes, in a tread surface view, a sipe 110 which is inclined relative to the tread width direction. An inclined angle, of the sipe 110 according to the present embodiment, relative to the tread width direction coincides with an inclined angle, of the circumferential groove 150, relative to the tread width direction. It is noted that the tread surface view means a view of a tread surface along a tire radial direction.

The inclined groove 130 extends, in the tread surface view, to be inclined relative to the tread width direction. The inclined groove 130 is positioned on the tire circumferential direction sides of the block 100.

The circumferential groove 150 extends in the tire circumferential direction. The circumferential groove 150 is positioned on the tread width direction sides of the block 100.

In the tread surface view, the inclined angle between the inclined groove 130 and the circumferential groove 150 is preferably 20 degrees or larger and 70 degrees or smaller. It is noted that, in the tread surface view, the inclined angle between the inclined groove 130 and the circumferential groove 150 is an angle formed by an extending direction of the inclined groove 130 and an extending direction of the circumferential groove 150.

The land portion 200 extends in the tire circumferential direction. The land portion 200 is adjacent to the circumferential groove 150 and the circumferential groove 250 in the tread width direction. The land portion 200 includes, in the tread surface view, a sipe 210 that is inclined relative to the tread width direction. An inclined angle of the sipe 210, according to the present embodiment, relative to the tread width direction coincides with the inclined angle, of the circumferential groove 150, relative to the tread width direction.

The circumferential groove 250 extends in the tire circumferential direction. The circumferential groove 250 is adjacent to the land portion 200 in the tread width direction. Similarly to the circumferential groove 150, the circumferential groove 250 need not extend along the tire circumferential direction, and the circumferential groove 150 only has to extend toward the tire circumferential direction. It is noted that, in Fig. 1, an outer end of the circumferential groove 250 in the tread width direction is not illustrated.

### (2) Block 100

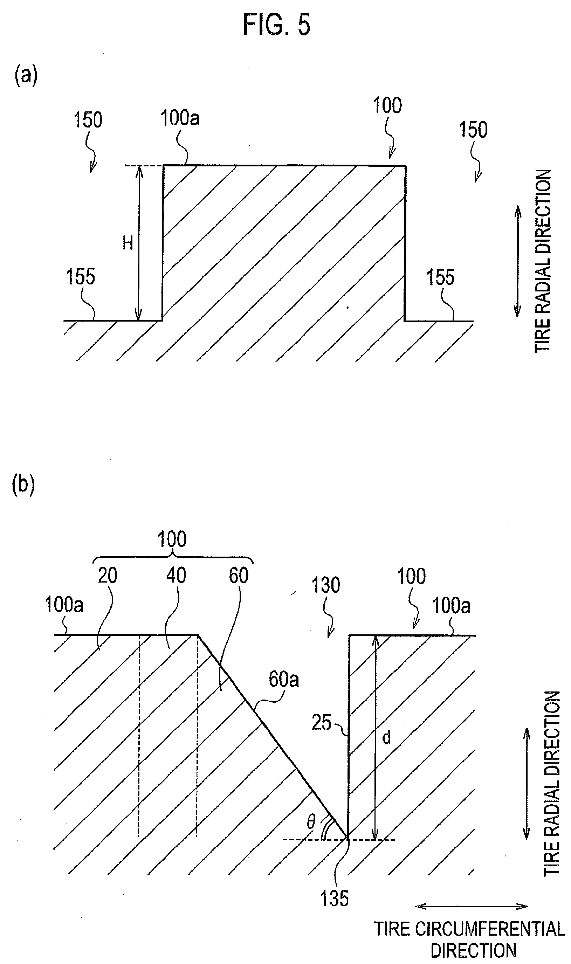

The block 100 according to the present embodiment will be described with reference to Fig. 1 to Fig. 5. Fig. 3 is a transparent perspective view seen through a part of the blocks 100 in Fig. 2. Fig. 4 is a diagram illustrating a part of the tread pattern of the tire according to the present embodiment. Fig. 5(a) is a cross-sectional view taken along A-A of Fig. 4. Fig. 5(b) is a cross-sectional view taken along B-B of Fig. 4. That is, Fig. 5(b) is a cross-sectional view, of the block 100, taken along the tire circumferential direction and a tire radial direction. It is noted that, in Fig. 2 to Fig. 4, the sipes 110 are not illustrated.

As shown in Fig. 3, the block 100 includes the block main body 20, the pair of extending portions 40, and the pair of protruding portions 60.

The block main body 20 is a main part of the block 100. An outer surface of the block main body 20 in the tire radial direction constitutes a tread surface 100a. The block main body 20 includes lateral surfaces 25 (a lateral surface 25A and a lateral surface 25B) on the tire circumferential direction sides. The extending portions 40 extend from the lateral surfaces 25 of the block main body 20. The block 100 includes edges that are inclined with respect to the tread width direction by the inclined grooves 130 in the tread surface view.

As illustrated in Fig. 3 and Fig. 4, the pair of extending portions 40 extend from the lateral surface 25A and the lateral surface 25B in the tire circumferential direction, respectively. Specifically, an extending portion 40A extends from the lateral surface 25A positioned on one of the tire circumferential direction sides toward the tire circumferential direction side (an upper side in Fig. 4). An extending portion 40B extends from the lateral surface 25B positioned on the other of the tire circumferential direction sides toward the tire circumferential direction side (a lower side in Fig. 4). The extending portion 40A is positioned at one end side in the tread width direction (a left side in Fig. 4). The extending portion 40B is positioned at the other end side in the tread width direction (a right side in Fig. 4). Similarly to the block main body 20, an outer surface of the extending portion 40 in the tire radial direction constitutes the tread surface 100a.

The extending portion 40 includes an edge portion inclined with respect to the tread width direction in the tread surface view. The extending portion includes an acute corner 45 formed by the inclined groove 130 and the circumferential groove 150 intersecting with each other. An angle of the corner 45 is an angle formed by the edge of the extending portions 40 positioned on the tire circumferential direction side and the edge of the extending portion 40 positioned on the tread width direction side. A corner 45A of the extending portion 40A has an angle α, and a corner 45B of the extending portion 40B has an angle β. Preferably, the angle α and the angle β are 20 degrees or larger and 70 degrees or smaller. More preferably, the angle α and the angle β are 40 degrees or larger and 50 degrees or smaller.

As shown in Fig. 3, the pair of protruding portions 60 protrude from the pair of extending portions 40 toward the tire circumferential direction, respectively. Specifically, a protruding portion 60A protrudes from the extending portion 40A toward the tire circumferential direction. A protruding portion 60B protrudes from the extending portion 40B toward the tire circumferential direction. The pair of protruding portions 60 protrude toward the neighboring blocks 100. Since the protruding portion 60 is formed to improve block stiffness of the corner 45, the protruding portions 60 come in contact with the corner 45 of the extending portion 40. That is, in the present embodiment, the protruding portion 60 protrudes from the end side of the extending portion 40 in at least the tread width direction.

As shown in Fig. 5(b), in the cross section taken along the tire circumferential direction and the tire radial direction, a surface 60a that is an outer surface of the protruding portion 60 in the tire radial direction extends from the tread surface 100a to a groove bottom 135 of the inclined groove 130. The protruding portion 60 is adjacent to the lateral surface 25 of the neighboring block 100 in the tire circumferential direction.

The surface 60a is inclined relative to the tire radial direction. In the cross section, when an angle formed by the surface 60a and the tire circumferential direction is represented as an angle θ, the angle θ is smaller than 90 degrees. The angle θ is preferably 20 degrees or larger and 70 degrees or smaller. When the angle θ is equal to or larger than 20 degrees, it is possible to suppress a groove depth of the inclined groove 130 from becoming small. Thus, since a groove volume of the inclined groove 130 can be secured, it is possible to improve snow performance by a snow column shearing force. When the angle θ is equal to or smaller than 70 degrees, in the cross section taken along the tire circumferential direction and the tire radial direction, since the block stiffness of the corner 45 is further improved, it is possible to appropriately suppress the wear.

As shown in Fig. 2, Fig. 5(a), and Fig. 5(b), a length from the tread surface 100a to the groove bottom 135 which is the innermost surface of the inclined groove 130 in the tire radial direction is represented as a groove depth d which is a depth of the inclined groove 130. The groove depth d is preferably more than 0.2 times and less than 0.8 times a height H of the block 100. That is, it is preferable to satisfy a relation of 0.2H < d < 0.8H. By setting the groove depth d to be more than 0.2 times the height H, the groove volume of the inclined groove 130 is large. Thus, it is possible to improve snow performance by a snow column shearing force. By setting the groove depth d to be less than 0.8 times the height H, it is possible to secure the block stiffness of the block 100. Accordingly, it is possible to suppress uneven wear caused by deformation of the block.

As shown in Fig. 3 and Fig. 4, the tire according to the present embodiment includes a plurality of blocks 100 including a block 101 and a block 102 adjacent to the block 101 in the tire circumferential direction. A lateral surface 63, in the tread width direction, of the protruding portion 60 of the block 101 has a region S that is overlapped, with the lateral surface 63, in the tread width direction, of the protruding portion 60 of the block 102, in the tire circumferential direction. Namely, when viewed from the tread width direction, the lateral surface 63 of the protruding portion 60 of the block 101 is overlapped with the lateral surface 63 of the protruding portion 60 of the block 102. The lateral surface 63, in the tread width direction, of the protruding portion 60 of the block 101 is adjacent to the lateral surface 63, in the tread width direction, of the protruding portion 60 of the block 102, in the tread width direction. In Fig. 3, a portion illustrated by the region S is a portion where the lateral surfaces 63 of the protruding portions 60 are adjacent to each other in the tread width direction. In the present embodiment, the lateral surface 63 of the protruding portion 60 of the block 101 is also adjacent to the lateral surface 43 of the extending portion 40 of the block 102 in the tread width direction. Similarly, the lateral surface 63 of the protruding portion 60 of the block 102 is also adjacent to the lateral surface 43 of the extending portion 40 of the block 101 in the tread width direction. It is noted that, in the region S, the lateral surfaces of the protruding portions 60 of the block 101 and the block 102 may be integrally formed.

### (3) Operation and Effect

In the tire according to the present embodiment, the block 100 includes the pair of extending portions 40 that respectively extend from the lateral surface 25A and the lateral surface 25B of the block 100 in the tire circumferential direction, and the pair of protruding portions 60 that respectively protrude from the pair of extending portions 40 in the tire circumferential direction. The extending portion 40 includes, in the tread surface view, the acute corner 45 formed by the inclined groove 130 and the circumferential groove 150 intersecting each other. The extending portion 40A of the pair of the extending portions 40 is positioned at the one end side in the tread width direction, and the extending portion 40B is positioned at the other end side in the tread width direction. In the cross section taken along the tire circumferential direction and the tire radial direction, the surface 60a of the outside of the protruding portion 60 in the tire radial direction is inclined relative to the tire radial direction.

Since the extending portion 40 extends in the tire circumferential direction, the extending portion 40 includes an edge portion having a width-direction edge component. Thus, since an edge effect can be enhanced, it is possible to improve the snow performance. Further, since the extending portion 40 and the protruding portion 60 extend in the tire circumferential direction, the extending portion 40 includes the lateral surface 43, and the protruding portion 60 includes the lateral surface 63. Thus, during cornering, on the basis of the lateral surface 43 of the extending portion 40 and the lateral surface 63 of the protruding portion 60, the snow column formed in the inclined groove 130 is kicked out. As a result, in the tire according to the present embodiment, a snow shearing force effect can be obtained such that snow performance is enhanced.

The protruding portion 60 protrudes from the extending portion 40 in the tire circumferential direction, and the surface 60a of the protruding portion 60 extends from the tread surface 100a to the groove bottom 135 of the inclined groove 130 and is inclined relative to the tire circumferential direction. Thus, the corner 45 is an obtuse angle in the cross section taken along the tire circumferential direction and the tire radial direction. Accordingly, since the block stiffness of the corner 45 is improved, it is possible to suppress the corner 45 from being worn.

The extending portion 40A is positioned at one end side in the tread width direction, and the extending portion 40B is positioned at the other end side in the tread width direction. Accordingly, since the extending portion 40 and the protruding portion 60 are not biased toward one side of the block 100 in the tread width direction, it is possible to maintain a balance in stiffness of the block 100 as a whole. Therefore, in comparison with a case where the extending portion 40 and the protruding portion 60 are biased toward one side of the block 100 in the tread width direction, it is possible to further suppress uneven wear.

Moreover, the tire according to the present embodiment includes the plurality of blocks 100 including the block 101 and the block 102 adjacent to the block 101. The lateral surface 63, in the tread width direction, of the protruding portion 60 of the block 101 includes the region that is overlapped with the lateral surface 63, in the tread width direction, of the protruding portion 60 of the block 102 in the tire circumferential direction. Accordingly, during cornering, since the block 101 and the block 102 support each other, the block stiffness is improved. As a result, it is possible to suppress uneven wear.

In addition, in the tread surface view, the inclined angle between the inclined groove 130 and the circumferential groove 150 is preferably 20 degrees or larger and 70 degrees or smaller. When the inclined angle is equal to or larger than 20 degrees, the angle α (the angle β) of the corner 45 is also equal to or larger than 20 degrees, such that the block stiffness of the corner 45 is improved. As a result, it is possible to suppress the block 100 from being worn. When the inclined angle is equal to or smaller than 70 degrees, the block 100 can sufficiently secure the width-direction edge components, so that snow performance is improved. When a balance between wear control and snow performance of the block is taken into account, the angle α and the angle β are more preferably 40 degrees or larger and 50 degrees or smaller.

Further, the tire according to the present embodiment includes the block array including the plurality of blocks 100, and the land portions 200 are positioned on both sides of the block array in the tread width direction while interposing the circumferential grooves 150. Snow enters between the block array and the land portion 200 (that is, into the circumferential groove 150). The entered snow is trodden down by weight of a vehicle to form snow columns. During cornering, since the block array or the land portion 200 kicks out the formed snow columns, in the tire according to the present embodiment, snow performance is improved by a snow column shearing force. During traction, since the central region in the tread width direction has a higher ground contact pressure than an end region, when the block array is positioned at the central region in the tread width direction, snow traction performance is improved. Thus, it is preferable to position the block array (the block 100) at the center in the tread with direction, particularly, on the tire equator line CL.

### (4) Comparative Evaluations

In order to clarify effects of the present invention, the following comparative evaluations were performed. The present invention is not limited to the following examples.

The comparative evaluations used tires including blocks having characteristics shown in Table 1 under the condition where a tire size is 195/65R15 91H, an internal pressure is 210 KPa, and a rim size is 5.5 J.

Specifically, the blocks according to Examples 1 to 3 include both extending portions and protruding portions. Inclined angles between circumferential grooves and inclined grooves in Examples 1 to 3 are 20 degrees, 70 degrees, and 45 degrees, respectively.

The block according to Comparative Example 1 includes neither extending portions nor protruding portions. An inclined groove is not inclined relative to a circumferential groove.

The block according to Comparative Example 2 does not include extending portions but includes protruding portions. An inclined groove is not inclined relative to a circumferential groove.

The block according to Comparative Example 3 includes neither extending portions nor protruding portions. An inclined angle between a circumferential groove and an inclined groove is 45 degrees.

The block according to Comparative Example 4 includes both extending portions and protruding portions. An inclined angle between a circumferential groove and an inclined groove is 45 degrees. The extending portions and the protruding portions are positioned at the same end side in the tread width direction.

In Comparative Example 2 and Examples 1 to 3, the extending portions and the protruding portions are positioned at different ends in the tread width direction (see the above-described embodiments).

Snow traction performance, snow handling performance, and wear resistance performance were evaluated using the respective tires.

In the evaluation of the snow traction performance, a time for which a speed increased from 5 km/h to 40 km/h was measured on a certain course with a snowy road surface. A measured result of Comparative Example 1 was used as a reference (100), and measured results of the respective tires were indexed. The results are shown in Table 1. As a value is larger, the snow traction performance is more excellent.

In the evaluation of the snow handling performance, a lap time was measured on a certain course with a snowy road surface. A measured result of Comparative Example 1 was used as a reference (100), and measured results of the respective tires were indexed. The results are shown in Table 1. As a value is larger, the snow handling performance is more excellent.

In the evaluation of the wear resistance performance, vehicles on which the respective tires were mounted traveled a traveling distance of 50000 km at an average speed of about 60 km/h. A wear amount of the block at a central portion of a tread surface in the tread width direction was measured. A measured result of Comparative Example 1 is used as a reference (100), and measured results of the respective tires were indexed. The results are shown in Table 1. As a value is smaller, the wear resistance performance is more excellent.

**[Table 1]**

| | COMP. EX.1 | COMP. EX.2 | COMP. EX.3 | COMP. EX.4 | EX.1 | EX.2 | EX.3 |
|---|---|---|---|---|---|---|---|
| PRESENCE OF EXTENDING PORTION | × | × | × | ○ | ○ | ○ | ○ |
| INCLINED ANGLE OF INCLINED GROOVES (DEGREE) | 90 | 90 | 45 | 45 | 20 | 70 | 45 |
| PRESENCE OF PROTRUDING PORTION | × | ○ | × | ○ | ○ | ○ | ○ |
| POSITIONS OF PROTRUDING PORTION AND EXTENDING PORTION | - | DIFFERENT ENDS IN TREAD WIDTH DIRECTION | - | SAME ENDS IN TREAD WIDTH DIRECTION | DIFFERENT ENDS IN TREAD WIDTH DIRECTION | ← | ← |
| SNOW TRACTION PERFORMANCE | 100 | 98 | 101 | 103 | 101 | 105 | 103 |
| SNOW HANDLING PERFORMANCE | 100 | 98 | 107 | 102 | 100 | 107 | 105 |
| WEAR RESISTANCE PERFORMANCE | 100 | 95 | 105 | 102 | 93 | 100 | 95 |

As shown in Table 1, it is found that the snow performance or the wear resistance performance in Comparative Examples 2 to 4 is deteriorated as compared with Comparative Example 1. Meanwhile, it is found that the snow performance in Examples 1 to 3 is improved without causing deterioration of the wear resistance performance. Thus, it can be seen that the snow performance of the tires according to Examples is improved without causing deterioration of the wear resistance performance as compared with the tires according to Comparative Examples.

Furthermore, it can be seen that as the inclined angle of the inclined groove is smaller, the wear resistance performance is more improved, whereas as the inclined angle of the inclined groove is larger, the snow performance is more improved. Accordingly, when a balance between the snow performance and the wear resistance performance is taken into account, it can be seen that the inclined angle of the inclined groove is preferably 40 degrees or larger and 50 degrees or smaller.

### (5) Other Embodiments

The content of the present invention has been disclosed through the embodiment of the present invention. However, it must not be understood that the discussions and the drawings constituting a part of this disclosure limit the present invention. The present invention includes various embodiments that are not described herein.

For example, in the present embodiment, the block array, that is, the blocks 100 are arranged in the central region in the tread width direction, but the arrangement of the blocks is not limited thereto. For example, in the tread portion, the blocks 100 may be arranged at the end in the tread width direction.

In addition, the block 100 and the land portion 200 include the sipe 110 and the sipe 210, respectively. However, the present invention is not limited to such a configuration. The block 100 and the land portion 200 may not include the sipe.

It is noted that the sipe has a groove width so that the sipe closes when the block comes in contact with the ground. Specifically, the sipe has a groove width of 1.5 mm or smaller. However, in the tire such as a TBR tire used for a large bus or a truck, a groove width of the sipe may be 1.5 mm or larger.

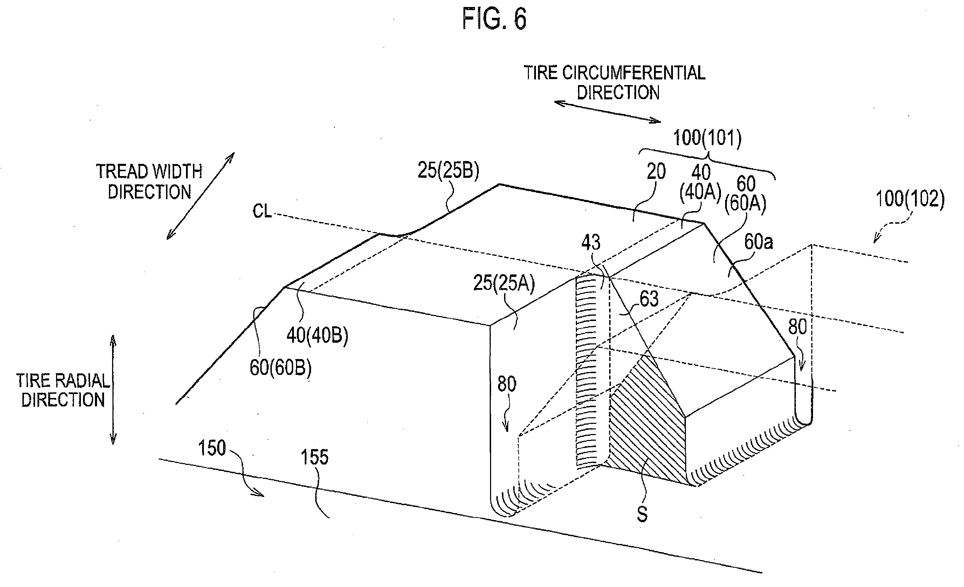

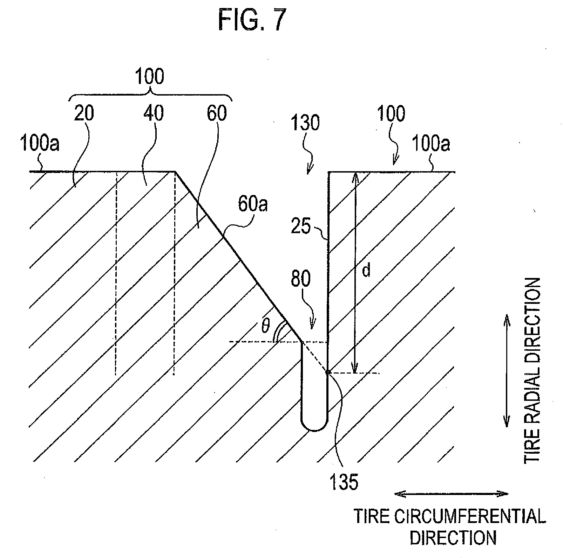

Moreover, in the present embodiment, in the cross section taken along the tire circumferential direction and the tire radial direction, the surface 60a that is the outer surface of the protruding portion 60 in the tire radial direction extends from the tread surface 100a to the groove bottom 135 of the inclined groove 130, and more specifically, the protruding portion 60 comes in contact with the lateral surface 25 of the neighboring block 100 in the tire circumferential direction. In the tire shown in Fig. 6 and Fig. 7, the protruding portion 60 does not come in contact with the lateral surface 25 of the neighboring block 100 in the tire circumferential direction, and the protruding portion 60 may be adjacent to the lateral surface 25 of the neighboring block 100. Fig. 6 is a transparent perspective view seen through a part of the blocks 100 in a tire according to another embodiment. Fig. 7 is a cross-sectional view of the block 100 shown in Fig. 6 taken along the tire circumferential direction and the tire radial direction.

As shown in Fig. 6 and Fig. 7, a groove portion 80 is formed in the inclined groove 130. The groove portion 80 is formed along a lateral surface of the block 100. Thus, the protruding portion 60 is adjacent to the lateral surface 25 of the block 100 with the groove portion 80 interposed therebetween. As illustrated in Fig. 7, when the groove portion 80 is formed, in the cross section taken along the tire circumferential direction and the tire radial direction, an intersecting point of an extending line of the surface 60a of the protruding portion 60 and the lateral surface 25 of the block 100 is used as the groove bottom 135, and the groove depth d is obtained. Accordingly, in the tire having the groove portion 80, the groove depth d is a length from the tread surface 100a to the intersecting point of the extending line of the surface 60a of the protruding portion 60 and the lateral surface 25 of the block 100. Even in the tire having the groove portion 80, it is preferable to satisfy a relation of 0.2H < d < 0.8H. It is noted that the groove portion 80 may be a sipe.

The tire according to the present invention may be a pneumatic tire, or may be a tire filled with rubber. Further, the tire according to the present invention may be a tire filled with rare gas such as argon, other than air.

It is to be noted that the tire according to the present invention may be a pneumatic tire, or alternatively, may be a gas-containing tire other than pneumatic air, containing a rare gas such as argon.

As described above, it is of course that the present invention includes various embodiments and the like not described herein. Therefore, the scope of the present invention is to be defined only by the inventive specific matter according to the appended claims.

### Industrial Applicability

The present invention provides a tire including blocks partitioned by a plurality of inclined grooves that are inclined relative to a tread width direction and a plurality of circumferential grooves that intersect with the inclined grooves and extend in a tire circumferential direction, with which it is possible to improve snow performance while suppressing the blocks from being worn.

## Claims

1. A tire including blocks (100) that, in a tread surface view, are partitioned by a plurality of inclined grooves (130) that extend to be inclined relative to a tread width direction and a plurality of circumferential grooves (150) that intersect with the inclined grooves (130) and extend in a tire circumferential direction, wherein
each block (100) includes a pair of extending portions (40) that respectively extend in the tire circumferential direction from a lateral surface (25A) positioned on one side in the tire circumferential direction and a lateral surface (25B) positioned on the other side in the tire circumferential direction,
each block (100) includes a pair of protruding portions (60) that respectively protrude from the pair of extending portions (40) in the tire circumferential direction,
each extending portion (40) includes, in the tread surface view, an acute corner (45) formed by the inclined groove (130) and the circumferential groove (150) intersecting with each other,
one extending portion (40) of the pair of extending portions (40) is positioned at one end side in the tread width direction, and the other extending portion (40) is positioned at the other end side in the tread width direction, and
in a cross section taken along the tire circumferential direction and a tire radial direction, an outer surface of the protruding portion (60) in the tire radial direction is inclined relative to the tire radial direction, **characterized in that**
each protruding portion (60) includes a portion which is in contact with the lateral surface (25) of a neighboring block (100) in the tire circumferential direction.

2. The tire according to claim 1, wherein
the tire includes a plurality of the blocks (100) including one block (101) and another block (102) adjacent to the one block (101) in the tire circumferential direction, and
a lateral surface (25B), at the tread width direction side, of the protruding portion (60) of the one block (101) includes a region that is overlapped with a lateral surface (25A), at the tread width direction side, of the protruding portion (60) of the another block (102) in the tire circumferential direction.

3. The tire according to claim 1 or 2, wherein
in the tread surface view, an inclined angle between the inclined groove (130) and the circumferential groove (150) is 20 degrees or larger and 70 degrees or smaller.

4. The tire according to any one of claims 1 to 3, wherein
the tire includes a block array including a plurality of the blocks (100), and
land portions (200) are positioned at both sides of the block (100) array in the tread width direction with the circumferential grooves (150) interposed therebetween.

## Patentansprüche

1. Reifen, der Blöcke (100) einschließt, die, in einer Laufflächen-Oberflächenansicht, durch mehrere geneigte Rillen (130), die sich so erstrecken, dass sie im Verhältnis zu einer Laufflächen-Breitenrichtung geneigt sind, und mehrere umlaufende Rillen (150), die sich mit den geneigten Rillen (130) überschneiden und sich in einer Reifenumfangsrichtung erstrecken, unterteilt sind, wobei
jeder Block (100) ein Paar von sich erstreckenden Abschnitten (40) einschließt, die sich jeweils in der Reifenumfangsrichtung von einer Seitenfläche (25A) aus, die auf der einen Seite in der Reifenumfangsrichtung angeordnet ist, und einer Seitenfläche (25B) aus, die auf der anderen Seite in der Reifenumfangsrichtung angeordnet ist, erstrecken,
jeder Block (100) ein Paar von vorspringenden Abschnitten (60) einschließt, die jeweils von dem Paar von sich erstreckenden Abschnitten (40) aus in der Reifenumfangsrichtung vorspringen,
jeder sich erstreckende Abschnitt (40), in der Laufflächen-Oberflächenansicht, eine spitze Ecke (45) einschließt, die durch die geneigte Rille (130) und die umlaufende Rille (150), die sich miteinander überschneiden, gebildet wird,
der eine sich erstreckende Abschnitt (40) des Paares von sich erstreckenden Abschnitten (40) auf der einen Stirnseite in der Laufflächen-Breitenrichtung angeordnet ist und der andere sich erstreckende Abschnitt (40) auf der anderen Stirnseite in der Laufflächen-Breitenrichtung angeordnet ist, und
in einem Querschnitt entlang der Reifenumfangsrichtung und einer Reifenradialrichtung eine Außenfläche des vorspringenden Abschnitts (60) in der Reifenradialrichtung im Verhältnis zu der Reifenradialrichtung geneigt ist, **dadurch gekennzeichnet, dass**
jeder vorspringende Abschnitt (60) einen Abschnitt einschließt, der in Berührung mit der Seitenfläche (25) eines benachbarten Blocks (100) in der Reifenumfangsrichtung steht.

2. Reifen nach Anspruch 1, wobei
der Reifen mehrere Blöcke (100) einschließt, die einen Block (101) und einen anderen Block (102) angrenzend an den einen Block (101) in der Reifenumfangsrichtung, einschließen, und
eine Seitenfläche (25B), an der Seite der Laufflächen-Breitenrichtung, des vorspringenden Abschnitts (60) des einen Blocks (101) einen Bereich einschließt, der mit einer Seitenfläche (25A), an der Seite der Laufflächen-Breitenrichtung, des vorspringenden Abschnitts (60) des anderen Blocks (102) in der Reifenumfangsrichtung überlappt ist.

3. Reifen nach Anspruch 1 oder 2, wobei
in der Laufflächen-Oberflächenansicht, ein geneigter Winkel zwischen der geneigten Rille (130) und der umlaufenden Rille (150) 20 Grad oder mehr und 70 Grad oder weniger beträgt.

4. Reifen nach einem der Ansprüche 1 bis 3, wobei
der Reifen eine Blockanordnung einschließt, die mehrere der Blöcke (100) einschließt, und
Stegabschnitte (200) an beiden Seiten der Blockanordnung (100) in der Laufflächen-Breitenrichtung angeordnet sind, wobei die umlaufenden Rillen (150) zwischen denselben eingefügt sind.

## Revendications

1. Bandage pneumatique, englobant des pavés (100), divisés, dans une vue de la surface de la bande de roulement, par plusieurs rainures inclinées (130) s'étendant de sorte à être inclinées par rapport à une direction de la largeur de la bande de roulement, et plusieurs rainures circonférentielles (150) coupant les rainures inclinées (130) et s'étendant dans une direction circonférentielle du bandage pneumatique, dans lequel :
chaque pavé (100) englobe une paire de parties d'extension (40), s'étendant respectivement dans la direction circonférentielle du bandage pneumatique, à partir d'une surface latérale (25A) positionnée sur un côté dans la direction circonférentielle du bandage pneumatique, et d'une surface latérale (25B) positionnée sur l'autre côté dans la direction circonférentielle du bandage pneumatique ;
chaque pavé (100) englobe une paire de parties en saillie (60) débordant respectivement de la paire de parties d'extension (40) dans la direction circonférentielle du bandage pneumatique ;
chaque partie d'extension (40) englobe, dans la vue de la surface de la bande de roulement, un angle aigu (45) formé par la rainure inclinée (130) et la rainure circonférentielle (150) se coupant l'une l'autre ;
une partie d'extension (40) de la paire de parties d'extension (40) est positionnée au niveau d'un côté d'extrémité dans la direction de la largeur de la bande de roulement, l'autre partie d'extension (40) étant positionnée au niveau de l'autre côté d'extrémité dans la direction de la largeur de la bande de roulement ; et
dans une section transversale prise le long de la direction circonférentielle du bandage pneumatique et une direction radiale du bandage pneumatique, une surface externe de la partie en saillie (60), dans la direction radiale du bandage pneumatique, est inclinée par rapport à la direction radiale du bandage pneumatique, **caractérisé en ce que** :
chaque partie en saillie (60) englobe une partie en contact avec la surface latérale (25) d'un pavé avoisinant (100) dans la direction circonférentielle du bandage pneumatique.

2. Bandage pneumatique selon la revendication 1, dans lequel :
le bandage pneumatique englobe plusieurs des pavés (100) englobant un pavé (101) et un autre pavé (102) adjacent audit un pavé (101) dans la direction circonférentielle du bandage pneumatique ; et
une surface latérale (25B), au niveau du côté de la direction de la largeur de la bande de roulement, de la partie en saillie (60) dudit un pavé (101) englobe une région chevauchée par une surface latérale (25A), au niveau du côté de la largeur de la bande de roulement, de la partie en saillie (60) dudit autre pavé (102), dans la direction circonférentielle du bandage pneumatique.

3. Bandage pneumatique selon les revendications 1 ou 2, dans lequel :
dans la vue de la surface de la bande de roulement, un angle incliné entre la rainure inclinée (130) et la rainure circonférentielle (150) correspond à 20 degrés ou plus et à 70 degrés ou moins.

4. Bandage pneumatique selon l'une quelconque des revendications 1 à 3, dans lequel :
le bandage pneumatique englobe un ensemble de pavés englobant plusieurs des pavés (100) ; et
des parties d'appui (200) sont positionnées au niveau des deux côtés de l'ensemble de pavés (100) dans la direction de la largeur de la bande de roulement, les rainures circonférentielles (150) étant agencées entre elles.
